# EUROPEAN PATENT APPLICATION

(11) **EP 2 916 593 A1**
(43) Date of publication of application: **09.09.2015**
(21) Application number: 12887406.2
(22) Date of filing: 05.11.2012
(51) Int. Cl.: H04W 48/18

(54) **METHOD, DEVICE AND SYSTEM FOR REGRESSING TO LONG TERM EVOLUTION (LTE) NETWORK**

(71) Applicant: Huawei Technologies Co., Ltd., Longgang District Shenzhen, Guangdong 518129 (CN)
(72) Inventor: SHU, Lin, Shenzhen Guangdong 518129 (CN); WU, Xiaobo, Shenzhen Guangdong 518129 (CN)
(74) Representative: Maiwald Patentanwalts GmbH
(86) International application number: PCT/CN2012/084106
(87) International publication number: WO 2014/067166

(57) **Abstract**

The present invention discloses a method, a device, and a system for returning to an LTE network, and relates to the field of communications technologies, so that after a CSFB service ends, a UE can return to an LTE PLMN with which the UE registers before CSFB, thereby ensuring continuity of a PS service, avoiding an unnecessary inter-PLMN handover, and improving user experience. The method of the present invention includes: after a CSFB service of a UE ends, receiving, by a base station, a PLMN ID of an LTE network with which the UE registers, where the PLMN ID is sent by a serving MSC/VLR of the UE; determining LTE frequency band information according to the PLMN ID; and sending, to the UE, a connection release message that includes the LTE frequency band information, so that the UE returns to an LTE PLMN corresponding to a PLMN ID with which the UE previously registers. Embodiments of the present invention are mainly applied to a process of returning to an LTE network after a CSFB service ends.

## Description

### TECHNICAL FIELD

The present invention relates to the field of communications technologies, and in particular, to a method, a device, and a system for returning to a Long Term Evolution (Long Term Evolution, LTE) network after a circuit switched fallback (Circuit Switched Fallback, CSFB) service ends.

### BACKGROUND

A circuit switched (Circuit Service, CS) network is a radio network that provides a circuit switched service, such as a voice call, and there is widespread coverage of 2G/3G radio networks, such as GSM and WCDMA. At the same time, with the development of network technologies, a packet switched (Packet Service, PS) network that specially provides a data service, for example, a Long Term Evolution (Long Term Evolution, LTE) network, is being deployed in a large scale. Therefore, the CS network and the PS network coexist on a current communications network, and an operator can use a 2G/3G network to provide a circuit switched service for a user and use the LTE network to provide a data service for the user.

Based on this network coverage manner, the 3rd Generation Partnership Project (3rd Generation Partnership Project, 3GPP) organization proposes a "circuit switched fallback" (CS Fallback, CSFB) technology, so that when needing to process a CS voice service, a user equipment (User Equipment, UE) that registers with the LTE network returns to a CS domain on the 2G/3G network to complete service processing. After a CS voice call is complete, a CSFB returning mechanism is further defined in an existing protocol, so as to ensure that after completing a CS voice call, a UE can return to a PS network to perform a PS service, which specifically includes the following: An MSC/VLR releases a connection set up during the CS voice call, indicates, to a base station, that a current connection is set up because of CSFB, and when releasing the connection, the base station instructs the UE to reselect LTE frequency band information of an LTE network, so that after being redirected to a suitable cell on the LTE frequency band information, the UE performs random reselection to access an LTE public land mobile network (Public Land Mobile Network,

PLMN) in broadcast information of the suitable cell.

In a process of implementing the returning to the LTE network, the inventors of the present invention find that prior art at least has the following disadvantages: because after a CS voice service is completed, a UE may be in coverage of LTE networks of multiple different PLMNs, for example, an LTE PLMN with which the UE registers before CSFB and an LTE network of a CS serving PLMN are both available for the UE; and if the UE reselects an LTE network of another PLMN, a data service suspended on the LTE PLMN with which the UE registers before a CSFB service is triggered cannot be restored. As a result, an ongoing data service is terminated and an unnecessary inter-PLMN handover is resulted, thereby affecting service experience of a user.

### SUMMARY

Embodiments of the present invention provide a method, a device, and a system for returning to an LTE network, so that after a CSFB service ends, a UE can return to an LTE PLMN with which the UE registers before CSFB, thereby ensuring continuity of a PS service, avoiding an unnecessary inter-PLMN handover, and improving user experience.

A first aspect of the present invention provides a method for returning to a Long Term Evolution LTE network, including:
obtaining, by a base station, that a circuit switched fallback CSFB service of a user equipment UE ends;
receiving, by the base station, a public land mobile network PLMN identity ID of an LTE network with which the UE registers, where the PLMN ID is sent by a serving mobile switching center/visitor location register MSC/VLR;
determining LTE frequency band information according to the PLMN ID; and
sending, to the UE, a connection release message that includes the LTE frequency band information.

According to the first aspect of the present invention, in a possible implementation manner, the obtaining, by a base station, that a circuit switched fallback CSFB service of a user equipment UE ends includes: receiving a connection release message that is sent by the serving MSCNLR and includes a CSFB indication.

According to the first aspect of the present invention and the possible implementation manner, in another possible implementation manner, if the serving MSC/VLR is an MSCNLR with which the UE registers, the serving MSC/VLR acquires the PLMN ID of the LTE network with which the UE registers from registration information of the UE; and
if the serving MSC/VLR is not the MSC/VLR with which the UE registers, the PLMN ID of the LTE network with which the UE registers is sent by the MSC/VLR with which the UE registers to the serving MSC/VLR.

According to the first aspect of the present invention and the possible implementation manners, in another possible implementation manner, the connection release message that includes the LTE frequency band information further includes the PLMN ID.

A second aspect of the present invention provides a method for returning to an LTE network, including:
receiving, by a user equipment UE, a connection release message that is sent by a base station and includes LTE frequency band information; and
camping on a cell on a frequency band specified in the LTE frequency band information, and selecting an LTE PLMN corresponding to a public land mobile network PLMN identity ID included in system broadcast information of the cell.

With reference to the second aspect of the present invention, in a possible implementation manner, system broadcast information of a suitable cell on the frequency band specified in the LTE frequency band information includes only one PLMN ID; and the selecting an LTE PLMN corresponding to a PLMN ID included in system broadcast information of the cell includes:
camping on the cell on the frequency band specified in the LTE frequency band information; and
returning to an LTE PLMN in the cell according to the system broadcast information of the cell.

With reference to the second aspect of the present invention, in another possible implementation manner, the connection release message further includes a PLMN ID of an LTE network with which the UE registers; and the selecting an LTE PLMN corresponding to a PLMN ID included in system broadcast information of the cell includes:
reading the system broadcast information of the cell, where the system broadcast information includes at least two PLMN IDs; and
selecting the LTE PLMN corresponding to the PLMN ID included in the connection release message from the at least two PLMN IDs.

A third aspect of the present invention provides a method for returning to an LTE network, including:
receiving, by a user equipment UE, a connection release message that is sent by a base station and includes LTE frequency band information;
camping on a cell on a frequency band specified in the LTE frequency band information;
reading a public land mobile network PLMN identity ID included in system broadcast information of the cell; and
selecting an LTE PLMN corresponding to a PLMN ID prestored in the UE from the PLMN ID, where the PLMN ID is stored in the UE when the UE registers with the LTE PLMN.

A fourth aspect of the present invention provides a base station, including:
a obtaining unit, configured to obtain that a circuit switched fallback CSFB service of a user equipment UE ends;
a receiving unit, configured to receive a public land mobile network PLMN identity ID of a Long Term Evolution LTE network with which the UE registers, where the PLMN ID is sent by a serving mobile switching center/visitor location register MSC/VLR;
a determining unit, configured to determine LTE frequency band information according to the PLMN ID received by the receiving unit; and
a sending unit, configured to send, to the UE, a connection release message that includes the LTE frequency band information determined by the determining unit.

With reference to the fourth aspect of the present invention, in a possible implementation manner, the obtaining unit is specifically configured to receive a connection release message that is sent by the serving MSC/VLR and includes a CSFB indication.

With reference to the fourth aspect of the present invention and the possible implementation manner, in another possible implementation manner, the connection release message that includes the LTE frequency band information further includes the PLMN ID.

A fifth aspect of the present invention provides a UE, including:
a receiving unit, configured to receive a connection release message that is sent by a base station and includes Long Term Evolution LTE frequency band information; and
a returning unit, configured to camp on a cell on a frequency band that is specified in the LTE frequency band information received by the receiving unit, and select an LTE PLMN corresponding to a public land mobile network PLMN identity ID included in system broadcast information of the cell.

With reference to the fifth aspect of the present invention, in a possible implementation manner, the connection release message further includes a PLMN ID of an LTE network with which the UE registers; and the returning unit includes:
a reading subunit, configured to read the system broadcast information of the cell, where the system broadcast information includes at least two PLMN IDs; and
a selecting subunit, configured to select the LTE PLMN corresponding to the PLMN ID included in the connection release message from the at least two PLMN IDs read by the reading subunit.

A sixth aspect of the present invention provides a UE, including:
a receiving unit, configured to receive a connection release message that is sent by a base station and includes Long Term Evolution LTE frequency band information;
a camping unit, configured to camp on a cell on a frequency band that is specified in the LTE frequency band information received by the receiving unit;
a reading unit, configured to read a public land mobile network PLMN identity ID included in system broadcast information of the cell on which the camping unit camps; and
a selecting unit, configured to select, from the PLMN ID read by the reading unit, an LTE PLMN corresponding to a PLMN ID prestored in the UE, where the PLMN ID is stored in the UE when the UE registers with the LTE PLMN.

A seventh aspect of the present invention provides a base station, including:
a receiver, configured to obtain that a circuit switched fallback CSFB service of a user equipment UE ends; and further configured to receive a public land mobile network PLMN identity ID of a Long Term Evolution LTE network with which the UE registers, where the PLMN ID is sent by a serving mobile switching center/visitor location register MSC/VLR;
a processor, configured to determine LTE frequency band information according to the PLMN ID received by the receiver; and
a sender, configured to send, to the UE, a connection release message that includes the LTE frequency band information determined by the processor.

With reference to the seventh aspect of the present invention, in a possible implementation manner, the receiver is specifically configured to receive a connection release message that is sent by the serving MSC/VLR and includes a CSFB indication.

With reference to the seventh aspect of the present invention and the possible implementation manner, in another possible implementation manner, the connection release message that includes the LTE frequency band information further includes the PLMN ID.

An eighth aspect of the present invention provides a UE, including:
a receiver, configured to receive a connection release message that is sent by a base station and includes Long Term Evolution LTE frequency band information; and
a processor, configured to camp on a cell on a frequency band that is specified in the LTE frequency band information received by the receiver, and select an LTE PLMN corresponding to a public land mobile network PLMN ID included in system broadcast information of the cell.

With reference to the eighth aspect of the present invention, in a possible implementation manner, the system broadcast information of the cell on the frequency band specified in the LTE frequency band information includes only one PLMN ID; and
the processor is further configured to camp on the cell on the frequency band that is specified in the LTE frequency band information received by the receiver, and return to an LTE PLMN in the cell according to the system broadcast information of the cell on which the processor camps.

With reference to the eighth aspect of the present invention, in another possible implementation manner, the connection release message further includes a PLMN ID of an LTE network with which the UE registers; and
the processor is further configured to read the system broadcast information of the cell on which the processor camps, where the system broadcast information includes at least two PLMN IDs, and select the LTE PLMN corresponding to the PLMN ID included in the connection release message from the at least two PLMN IDs.

A ninth aspect of the present invention provides a UE, including:
a receiver, configured to receive a connection release message that is sent by a base station and includes Long Term Evolution LTE frequency band information;
a processor, configured to camp on a cell on a frequency band that is specified in the LTE frequency band information received by the receiver; and
a memory, configured to store a public land mobile network PLMN identity ID of LTE with which the UE registers, where the PLMN ID is stored in the memory by the UE when the UE registers with the LTE PLMN, where:
   the receiver is further configured to receive system broadcast information of the cell on which the processor camps; and
   the processor is further configured to read a PLMN ID included in the system broadcast information of the cell received by the receiver, and select an LTE PLMN corresponding to the PLMN ID prestored in the memory.

A tenth aspect of the present invention provides a system for returning to a Long Term Evolution LTE network, including a serving MSC/VLR, a base station, and a UE, where:
the serving MSC/VLR is configured to send, after a circuit switched fallback CSFB service of the UE ends, a public land mobile network PLMN identity ID of LTE with which the UE registers to the base station;
the base station is configured to obtain that the circuit switched fallback CSFB service of the user equipment UE ends, receive the public land mobile network PLMN identity ID of the LTE network with which the UE registers, where the PLMN ID is sent by the serving mobile switching center/visitor location register MSC/VLR; determine LTE frequency band information according to the PLMN ID; and send, to the UE, a connection release message that includes the LTE frequency band information; and
the UE is configured to receive the connection release message that is sent by the base station and includes the LTE frequency band information, and
camp on a cell on a frequency band specified in the LTE frequency band information, and select an LTE PLMN corresponding to a public land mobile network PLMN identity ID included in system broadcast information of the cell.

An eleventh aspect of the present invention further provides a method for returning to a Long Term Evolution LTE network, including:
receiving, by a user equipment UE in a circuit switched fallback CSFB process, an equivalent PLMN list that is sent by a mobility management network element and includes a public land mobile network PLMN identity ID of an LTE network with which the UE registers;
receiving, by the UE, a signaling release message that is sent by a base station and includes LTE frequency band information;
camping on a cell on a frequency band specified in the LTE frequency band information; and
selecting an LTE PLMN corresponding to the PLMN ID included in the equivalent PLMN list from at least one PLMN ID included in system broadcast information of the cell.

A twelfth aspect of the present invention provides a UE, including:
a receiving unit, configured to receive, in a circuit switched fallback CSFB process, an equivalent PLMN list that is sent by a mobility management network element and includes a public land mobile network PLMN identity ID of a Long Term Evolution LTE network with which the UE registers, where
the receiving unit is further configured to receive a connection release message that is sent by a base station and includes LTE frequency band information;
a camping unit, configured to camp on a cell on a frequency band that is specified in the LTE frequency band information received by the receiving unit; and
a selecting unit, configured to select an LTE PLMN corresponding to the PLMN ID included in the equivalent PLMN list from at least one PLMN ID included in system broadcast information of the cell on which the camping unit camps.

A thirteenth aspect of the present invention provides a UE, including:
a receiver, configured to receive, in a circuit switched fallback CSFB process, an equivalent PLMN list that is sent by a mobility management network element and includes a public land mobile network PLMN identity ID of a Long Term Evolution LTE network with which the UE registers, where
the receiver is further configured to receive a message that is sent by a base station and includes LTE frequency band information; and
a processor, configured to camp on a cell on a frequency band that is specified in the LTE frequency band information received by the receiver, and select an LTE PLMN corresponding to the PLMN ID included in the equivalent PLMN list from at least one PLMN ID included in system broadcast information of the cell.

In the method, the device, and the system for returning to an LTE network provided in the embodiments of the present invention, a PLMN ID with which a UE registers is acquired, and LTE frequency band information supported by an LTE PLMN with which the UE registers is determined, so that after a CSFB service ends, the UE returns to an LTE PLMN on the specified LTE frequency band. Compared with the prior art that a UE returns to an LTE PLMN on an LTE frequency band supported by a CS PLMN, an LTE frequency band supported by an LTE PLMN with which the UE registers before CSFB is initiated can be specified, thereby ensuring that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a method for returning to an LTE network according to an embodiment of the present invention;
FIG. 2 is a flowchart of a method for returning to an LTE network according to another embodiment of the present invention;
FIG. 3 is a flowchart of a method for returning to an LTE network according to another embodiment of the present invention;
FIG. 4 is a flowchart of a method for returning to an LTE network according to another embodiment of the present invention;
FIG. 5 is a flowchart of a method for returning to an LTE network according to another embodiment of the present invention;
FIG. 6 is a schematic structural diagram of a base station according to another embodiment of the present invention;
FIG. 7 is a schematic structural diagram of a UE according to another embodiment of the present invention;
FIG. 8 is a schematic structural diagram of a UE according to another embodiment of the present invention;
FIG. 9 is a schematic structural diagram of a base station according to another embodiment of the present invention;
FIG. 10 is a schematic structural diagram of a UE according to another embodiment of the present invention;
FIG. 11 is a schematic structural diagram of a UE according to another embodiment of the present invention;
FIG. 12 is a schematic structural diagram of a system for returning to an LTE network according to another embodiment of the present invention;
FIG. 13 is a flowchart of a method for returning to an LTE network according to another embodiment of the present invention;
FIG. 14 is a schematic structural diagram of a UE according to another embodiment of the present invention; and
FIG. 15 is a schematic structural diagram of a UE according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

An LTE network described in this specification is an evolved UMTS terrestrial radio access network (Evolved UMTS Territorial Radio Access Network, E-UTRAN for short, where UMTS is short for Universal Mobile Telecommunications System), a 2G network is a GSM/EDGE radio access network (GSM/EDGE Radio Access Network, GERAN for short, where GSM is short for Global System of Mobile communication, and EDGE is short for Enhanced Data Rate for GSM Evolution), and a 3G network is a UTRAN network. A PLMN of the LTE network provides only a PS service, and the 2G/3G network includes both a PLMN providing a CS service and a PLMN providing a PS service.

In the embodiments of the present invention, a user equipment (User Equipment, UE for short) may be any one of the following, and may be static or moving. A static UE may include a terminal (Terminal), a mobile station (Mobile Station), a subscriber unit (Subscriber Unit), a station (Station), or the like. A mobile UE may include a cellular phone (Cellular Phone), a personal digital assistant (Personal Digital Assistant, PDA), a wireless modem (modem), a radio communications device, a handheld device (handheld), a laptop computer (Laptop Computer), a cordless phone (Cordless Phone), a wireless local loop (Wireless Local Loop, WLL) station, or the like. The UE may be distributed on an entire radio network.

For ease of understanding of persons skilled in the art, specific application examples are used for description in the following. It should be noted that in the embodiments of the present invention, a base station may be a base station subsystem (Base Station Subsystem, BSS) on the 2G network or a radio network subsystem (Radio Network Subsystem, RNS) on the 3G network. A mobility management network element may be any one of the following: a mobile switching center (Mobile Switching Centre, MSC)/visitor location register (Visitors Location Register, VLR), a mobility management entity (Mobility Management Entity, MME), or a serving GPRS support node (Serving GPRS Support Node, SGSN); and generally, the MSC and the VLR are integrated as one network element, which is called MSC/VLR, or called VLR for short.

Because an LTE network supports the PS data service only, when a UE performs a data service or is in an idle state on the LTE network, and if the UE will initiate or receive a circuit switched service (including a voice call, a supplementary service, a location service, and the like), a circuit switched fallback (Circuit Service Fall Back, CSFB) process needs to be performed, so that the UE returns to 2G/3G network to complete the circuit switched service on the 2G/3G network. After the circuit switched service ends (when a bottom-layer link set up on the 2G/3G network by the UE for a CSFB service is released, it indicates that the circuit switched service ends), a terminal needs to return to the LTE network, so as to continue to perform the data service on the LTE network. In the embodiments of the present invention, a CSFB service specifically refers to a CS service performed by a UE camping on an LTE network after the UE falls back to a 2G/3G network in a CSFB process that is initiated because the UE needs to perform a circuit switched CS service; and the CSFB service includes an uplink CSFB service or a downlink CSFB service, for example, the UE receives a voice call or initiates a voice call on the LTE network.

According to different processed and controlled message objects inside the UE, the inside of the UE may be classified into an access stratum (Access Stratum, AS) and a non-access stratum (Non-Access Stratum, NAS). The AS is responsible for receiving an RR/RRC connection release message, selecting a suitable cell according to a frequency band and camping on the cell, reading a system broadcast message of the cell, acquiring an available PLMN ID, and reporting the available PLMN ID to the NAS. The NAS determines, according to the available PLMN ID reported by the AS stratum, whether to perform PLMN selection.

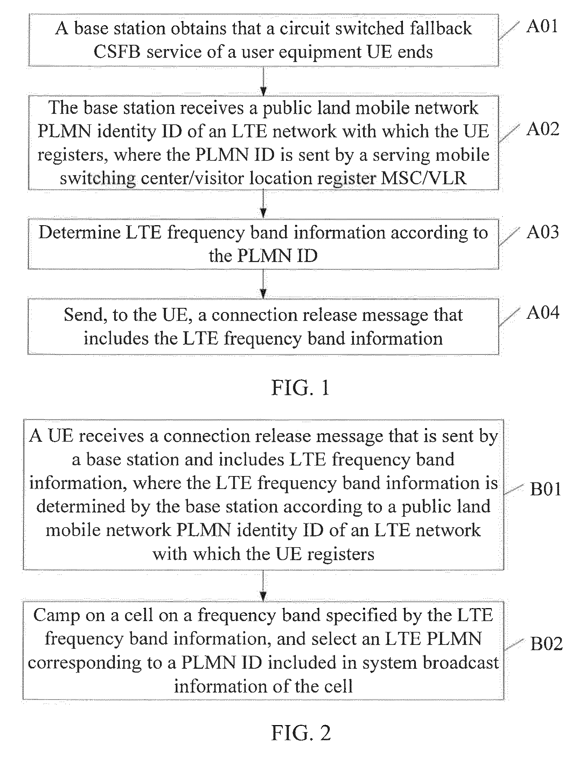

An embodiment of the present invention provides a method for returning to an LTE network, where the method is applied after a circuit switched fallback CSFB service of a user equipment UE ends. As shown in FIG. 1, the method includes:

A01. A base station obtains that a circuit switched fallback CSFB service of a user equipment UE ends.

A02. The base station receives a public land mobile network PLMN identity ID of an LTE network with which the UE registers, where the PLMN ID is sent by a serving mobile switching center/visitor location register MSC/VLR.

If the serving MSC/VLR is an MSC/VLR with which the UE registers, the serving MSC/VLR acquires the PLMN ID of the LTE network with which the UE registers from registration information of the UE; and if the serving MSC/VLR is not the MSC/VLR with which the UE registers, the PLMN ID of the LTE network with which the UE registers is sent by the MSC/VLR with which the UE registers to the serving MSC/VLR.

A03. Determine LTE frequency band information according to the PLMN ID.

The determined LTE frequency band information is LTE frequency band information supported by a PLMN corresponding to the PLMN ID. Alternatively, the determined LTE frequency band information may also be LTE frequency band information supported by another PLMN.

A04. Send, to the UE, a connection release message that includes the LTE frequency band information.

The base station sends, to the UE, the connection release message that includes the LTE frequency band information, so that the UE camps on a cell on a frequency band specified in the LTE frequency band information and selects an LTE PLMN corresponding to a PLMN ID included in system broadcast information of the cell.

Further, optionally, the connection release message may further include the PLMN ID of the LTE network with which the UE registers, so that the UE camps on the cell on the frequency band specified in the LTE frequency band information and, when the system broadcast information of the cell includes at least two PLMN IDs, selects an LTE PLMN corresponding to the PLMN ID included in the connection release message.

In the method for returning to an LTE network provided in this embodiment of the present invention, a PLMN ID with which a UE registers is acquired, and LTE frequency band information supported by an LTE PLMN with which the UE registers is determined, so that after a CSFB service ends, the UE returns to an LTE PLMN on the specified LTE frequency band. Compared with the prior art that a UE returns to an LTE PLMN on an LTE frequency band supported by a CS PLMN, an LTE frequency band supported by an LTE PLMN with which the UE registers before the CSFB service is initiated can be specified, thereby ensuring that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

Another embodiment of the present invention provides a method for returning to an LTE network, where the method is applied after a circuit switched fallback CSFB service of a user equipment UE ends. As shown in FIG. 2, the method includes:

B01. A UE receives a connection release message that is sent by a base station and includes LTE frequency band information, where the LTE frequency band information is determined by the base station according to a public land mobile network PLMN identity ID of an LTE network with which the UE registers.

B02. Camp on a cell on a frequency band specified in the LTE frequency band information, and select an LTE PLMN corresponding to a PLMN ID included in system broadcast information of the cell.

Further, optionally, the connection release message may further include the PLMN ID of the LTE network with which the UE registers; and the camping on a cell on a frequency band specified in the LTE frequency band information, and selecting an LTE PLMN corresponding to a PLMN ID included in system broadcast information of the cell includes: obtaining, through searching, the cell on the frequency band that is specified in the LTE frequency band information, and camping on the cell; reading the system broadcast information of the cell, where the system broadcast information includes at least two PLMN IDs; and selecting an LTE PLMN corresponding to the PLMN ID of the LTE network with which the UE registers from the at least two PLMN IDs.

In the method for returning to an LTE network provided in this embodiment of the present invention, a PLMN ID with which a UE registers is acquired, and LTE frequency band information supported by an LTE PLMN with which the UE registers is determined, so that after a CSFB service ends, the UE returns to an LTE PLMN on the specified LTE frequency band. Compared with the prior art that a UE returns to an LTE PLMN on an LTE frequency band supported by a CS PLMN, an LTE frequency band supported by an LTE PLMN with which the UE registers before CSFB can be specified, thereby ensuring that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

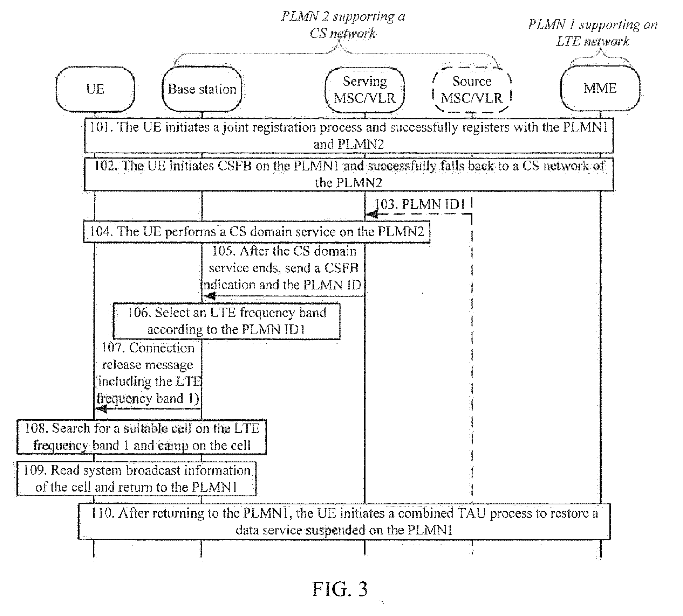

As shown in FIG. 3, another embodiment of the present invention provides a method for returning to an LTE network, including:

101. A UE initiates joint registration and successfully registers with a PLMN1 supporting an LTE network and a PLMN2 supporting a CS network.

A UE that camps on an E-UTRAN and supports CSFB needs to initiate an joint registration process to implement simultaneous registration in a PS domain of an EPC network and a CS domain of a CS network. When the UE registers with a PS network (LTE PLMN1), a source MSCNLR on the PLMN2 may acquire a PLMN ID1 of the PLMN1.

In the joint registration process, a network side selects a source MSC/VLR for the UE: When the UE registers with a CS network (CS PLMN2), a mobility management entity (Mobile Managenment Entity, MME) selects a source MSC/VLR capable of providing a service for the UE, and sends a location update request to the selected source MSC/VLR, so as to set up an SGs association. The source MSC/VLR sends a registration request to a home location register (Home Location Register, HLR) and acquires subscription data of the UE in the CS domain, so as to implement registration of the UE in the CS domain. Optionally, in a scenario in which an MSC resource pool (MSC pool) is not deployed, the MME selects a serving MSC/VLR according to current location information of the UE; and in a scenario in which an MSC resource pool (MSC pool) is deployed, the MME selects a serving MSC/VLR from the MSC pool according to the current location information of the UE and an international mobile subscriber identity (International Mobile Subscriber Identity, IMSI) hash table.

102. The UE initiates CSFB on the PLMN1 and successfully falls back to a CS network of the PLMN2.

A CSFB service can be normally initiated only after the joint registration is successfully implemented. In uplink and downlink CSFB processes initiated by the UE, an MME on an LTE network selects a CS serving PLMN ID for the UE and sends the CS serving PLMN ID to an eNodeB (eNodeB) on the LTE network, which aims to notify the eNodeB that the UE should hand over to a CS network corresponding to the CS PLMN ID. After handing over to the CS network, the UE may initiate a CS service. For example, in a CS voice call setup process initiated by the UE, a CSFB indication may be sent to the serving MSC/VLR, where the CSFB indication is used to indicate that a current voice call is triggered because CSFB is performed on the LTE network. After a CS voice call connection is set up successfully, the UE performs a voice call.

103. The source MSC/VLR sends the PLMN ID1 to the serving MSCNLR.

Step 103 is an optional step. If a serving MSC/VLR in a 2G/3G network to which the UE falls back is the source MSCNLR, step 103 does not need to be performed. Only when the serving MSC/VLR of the UE is not the source MSC/VLR with which the UE registers in step 101, step 103 is performed.

In the joint registration process in step 101, the source MSC/VLR may acquire the PLMN ID1 with which the UE registers from registration information. For example, in the joint registration process, the MME may send its MME name (name) to the source MSCNLR, where the MME name includes the PLMN ID1 with which the UE registers. Alternatively, in the joint registration process, the MME may send a tracking area identity (Tracking Area Identity, TAI) or an E-UTRAN cell global identifier (E-UTRAN Cell Global Identity, ECGI) to the source MSC/VLR, where the TAI or the ECGI includes the PLMN ID1 with which the UE registers.

In this embodiment, if after falling back to the 2G/3G network, the UE enters another MSCNLR, that is, a serving range of a target MSC/VLR, in a location update process with the target MSC/VLR, the UE may report location information of the source MSCNLR to the target MSCNLR. Then, the target MSC/VLR sends a Mobile Application Part (Mobile Application Part, MAP) protocol SEND IDENTIFICATION (SEND IDENTIFICATION) request message to the source MSCNLR according to the location information reported by the UE, so as to request acquiring of a PLMN ID with which the UE registers, and the source MSC/VLR sends, in a MAP protocol SEND IDENTIFICATION response message, the PLMN ID1 which is acquired in step 101 and the UE registers with to the target MSC/VLR. It should be noted that the target MSC/VLR is the serving MSCNLR in step 103.

104. The UE performs the CS service on the PLMN2.

The CS service performed after the CSFB may include initiating or receiving of a voice call, a supplementary service, a location service, and the like.

105. After the CS service of the UE ends, the serving MSC/VLR sends a CSFB indication and the PLMN ID1 to a base station, that is, the base station obtains that a CSFB service of the UE ends.

After the CS service of the UE ends, the serving MSC/VLR initiates a connection connection release process to the base station and carries the CSFB indication and PLMN ID1 in a connection release message. The CSFB indication is used to indicate that the CS service of the current UE is caused by the CSFB, and after the CS service ends, the UE needs to be redirected back to the LTE network; and when being redirected to the LTE network, the UE returns, according to the PLMN ID1, to an LTE PLMN corresponding to the PLMN ID1. Optionally, the serving MSC/VLR may directly send the tracking area identity (Tracking Area Identity, TAI) or the E-UTRAN cell global identifier (E-UTRAN Cell Global Identity, ECGI) that includes the PLMN ID1 with which the UE registers to the base station.

106. The base station determines an LTE frequency band 1 according to the PLMN ID 1.

The base station may query preconfigured LTE frequency band support information according to the PLMN ID2 of the PLMN that currently provides the CS service for the UE and the received PLMN ID1, and determine information about the LTE frequency band 1 supported by the PLMN1. The determined information about the LTE frequency band 1 is information about the LTE frequency band 1 supported by the PLMN1 corresponding to the PLMN ID1. Alternatively, the determined information about the LTE frequency band 1 may also be LTE frequency band information supported by another PLMN.

107. The base station sends a connection release message to the UE, where the connection release message includes the information about the LTE frequency band 1.

The connection release message mentioned in the specification of the present application may be a radio resource (Radio Resource, RR) connection release (release) message, a radio resource control (Radio Resource Control, RRC) connection release message, or another message used to assist in radio resource release. If the base station is a BSS, the BSS sends an RR connection release message to the UE, and the RR connection release message includes a redirection indication that is used to instruct the UE to perform, after an RR connection is released, redirection, and return to the LTE network; and the information about the LTE frequency band 1 is used as content of the redirection indication and is used to instruct the UE to perform the redirection and return to an LTE network corresponding to the LTE frequency band 1. If the base station is an RNS, the RNS sends an RRC connection release message to the UE, and the RRC connection release message includes a redirection indication that is used to instruct the UE to perform, after an RRC connection is released, redirection and return to the LTE network; and the information about the LTE frequency band 1 is used as content of the redirection indication and is used to instruct the UE to perform the redirection and return to an LTE network corresponding to the LTE frequency band 1.

108. The UE searches for a suitable cell (Suitable Cell) on the LTE frequency band 1 and camps on the cell.

After releasing a current RR/RRC connection, the UE searches for the suitable cell on the LTE frequency band 1 according to the information about the LTE frequency band 1 specified in the redirection indication, and camps on the suitable cell found on the LTE frequency band 1. The suitable cell is a cell on which the UE can camp and from which a normal service can be acquired. In a practical application, it may occur that the UE cannot acquire a normal service (for example, only an emergency service can be acquired) from the cell found on the LTE frequency band 1, that is, a non-suitable cell; and in this case, the UE may search for a suitable cell again on all frequency bands. However, this is not considered in this embodiment of the present invention, and therefore details are not repeatedly described.

109. The UE reads system broadcast information of the cell and selects the LTE PLMN1 corresponding to the PLMN ID1 included in the system broadcast information.

In this embodiment, if the suitable cell found by the UE on the LTE frequency band 1 is a non-shared cell, that is, the system broadcast information of the cell includes only one PLMN ID, after reading the system broadcast information of the cell, the UE may acquire only the ID of the LTE PLMN1 and selects the PLMN1 to access the PS domain. Because the information about the LTE frequency band 1 is determined according to the PLMN ID1 with which the UE registers, the UE camps on a cell on a frequency band specified in the information about the LTE frequency band 1 received in step 107 and selects the PLMN ID1 included in system broadcast information of the cell, that is, the UE returns to the LTE PLMN1 with which the UE registers before the CSFB. Certainly, if the suitable cell found by the UE on the LTE frequency band 1 is a shared cell, that is, the system broadcast information of the cell includes at least two PLMN IDs, a traditional PLMN selection mechanism may be used to select one PLMN or one PLMN may be selected randomly.

Therefore, the UE has returned to the LTE PLMN1 with which the UE registers before the CSFB. If the UE needs to perform a PS service subsequently, a connection setup process may be initiated on the PLMN1.

110. The UE initiates a combined tracking area update (Tracking Area Updating, TAU) process to restore a data service suspended on the PLMN1.

After selecting the PLMN1, the UE may not need to initiate a complete LTE registration process, but performs the combined TAU process, thereby reducing signaling overhead caused due to returning to the LTE network. In addition, if the UE is performing a PS data service on the PLMN1 before the CSFB, the PS data service is interrupted and suspended because of the CSFB. In a traditional mechanism for returning to an LTE network, if the UE cannot return to the PLMN 1, the suspended data service will be terminated and deleted, and a user needs to initiate the data service again. In a mechanism for returning to an LTE network provided in the present invention, the UE returns to the LTE PLMN1 with which the UE registers before the CSFB, so that the suspended data service can be restored, thereby improving user experience.

Optionally, after step 105 in this embodiment is performed, if the UE is currently in a PS domain connected state, the base station may initiate a PS handover process to hand over the UE to the LTE PLMN with which the UE previously registers, and when a PS handover is performed, the PLMN ID is considered when the base station selects a target cell. The UE performs the handover process initiated by the base station and returns to the LTE PLMN with which the UE previously registers. It should be noted that if the base station initiates the PS handover process after step 105, step 106 to step 109 are not performed, and step 110 is directly performed after the PS handover process is complete.

In the method for returning to an LTE network provided in this embodiment of the present invention, a PLMN ID with which a UE registers is acquired, and LTE frequency band information supported by an LTE PLMN with which the UE registers is determined, so that after a CSFB service ends, the UE returns to an LTE PLMN on the specified LTE frequency band. Compared with the prior art that a UE returns to an LTE PLMN on an LTE frequency band supported by a CS PLMN, an LTE frequency band supported by an LTE PLMN with which the UE registers before CSFB can be specified, thereby ensuring that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

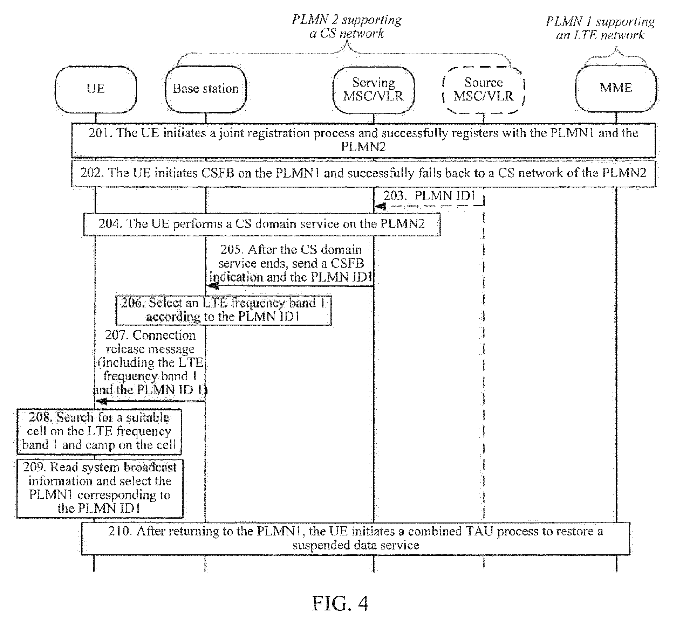

Another embodiment of the present invention further provides a method for returning to an LTE network, so as to ensure that in a situation where a suitable cell found by a UE is a shared cell, a UE can return to an LTE PLMN with which the UE registers before CSFB, where as shown in FIG. 4, the method includes:

201. A UE initiates joint registration and successfully registers with a PLMN1 supporting an LTE network and a PLMN2 supporting a CS network.

202. The UE initiates CSFB on the PLMN1 and successfully falls back to a CS network of the PLMN2.203. A source MSC/VLR sends the PLMN ID1 to a serving MSC/VLR.

Step 203 is an optional step, and only when the serving MSC/VLR of the UE is not the source MSC/VLR with which the UE registers in step 201, step 203 is performed.

204. The UE performs a CS service on the PLMN2.

205. When the CS service of the UE ends, the serving MSC/VLR sends a CSFB indication and the PLMN ID1 to a base station.

After the CS service of the UE ends, the serving MSC/VLR initiates a connection release process to the base station and carries the CSFB indication and the PLMN ID1 in a connection release message. The CSFB indication is used to indicate that the CS service of the current UE is caused by the CSFB, and after the CS service ends, the UE needs to be redirected back to the LTE network; and when being redirected to the LTE network, the UE returns, according to the PLMN ID1, to an LTE PLMN corresponding to the PLMN ID1. Optionally, the serving MSC/VLR may directly send a tracking area identity (Tracking Area Identity, TAI) or an E-UTRAN cell global identifier (E-UTRAN Cell Global Identity, ECGI) that includes the PLMN ID1 with which the UE registers to the base station.

206. The base station determines information about the LTE frequency band 1 according to the PLMN ID1.

The determined information about the LTE frequency band 1 is LTE frequency band information supported by the PLMN1 corresponding to the PLMN ID1. Alternatively, the determined information about the LTE frequency band 1 may also be LTE frequency band information supported by another PLMN.

Implementation manners of steps 201-206 are similar to those of steps 101-106 in the embodiment shown in FIG. 3, and therefore details are not repeatedly described herein.

207. The base station sends a connection release message to the UE, where the connection release message includes the LTE frequency band 1 and the PLMN ID1.

The LTE frequency band 1 and the PLMN ID1 may be carried in an RR/RRC connection release message. The LTE frequency band 1 is used as a redirection indication and is used to indicate that after releasing the RR/RRC connection, the UE needs to return to the LTE network and return, according to the PLMN ID1 and the LTE frequency band 1 included in the redirection indication, to the LTE PLMN1 corresponding to the PLMN ID1.

208. The UE searches for a suitable cell on the LTE frequency band 1 and camps on the cell.

This step is similar to step 109 in the embodiment shown in FIG. 3. After releasing the current RR/RRC connection, the UE searches for the suitable cell on the LTE frequency band 1 according to information about the LTE frequency band 1 specified in the redirection indication and camps on the cell. In this case, the cell on which the UE camps may be a shared cell, or may also be a non-shared cell.

209. Read system broadcast information of the cell and select the PLMN1 corresponding to the PLMN ID1.

The UE may read a currently available PLMN from the system broadcast information of the cell. An available PLMN mentioned in the specification of the present application refers to a PLMN corresponding to a PLMN ID read by a UE from a system broadcast message of a cell on which the UE camps. If the UE reads only one PLMN ID from the system broadcast information of the cell, and the PLMN ID is the PLMN ID1, that is, the cell on which the UE camps is a non-shared cell and the PLMN1 is available, the UE may directly return to the PLMN1. If the UE reads at least two PLMN IDs from the system broadcast information of the cell, that is, the cell on which the UE camps is a shared cell, at least two PLMN IDs are read from the system broadcast information, the at least two PLMN IDs include the PLMN ID1, and the LTE PLMN1 is available, the PLMN1 corresponding to the PLMN ID1 is selected, and therefore the UE returns to the LTE PLMN1 with which the UE registers before the CSFB is initiated.

It may be understood that if the PLMN ID1 with which the UE registers does not exist in an available PLMN ID acquired after the UE reads the system broadcast information of the cell, that is, the LTE PLMN1 is not available, the UE may give up returning to the LTE PLMN1 with which the UE previously registers, and select another available LTE PLMN.

Specifically, an AS stratum acquires the PLMN ID carried in the system broadcast message and the PLMN ID1 sent by the base station, matches the PLMN ID1 with the PLMN ID in the system broadcast information, and reports only the PLMN ID1 to a NAS stratum if it is determined that the PLMN1 is available, so that the NAS obtains only one available PLMN ID1, and the PLMN1 corresponding to the PLMN ID1 is directly selected, that is, the UE returns to the LTE network with which the UE registers before the CSFB. Certainly, if the system broadcast information does not include the PLMN ID1, that is, the PLMN1 is not available, it indicates that the UE may have left coverage of the PLMN1 and cannot return to the PLMN1, and therefore the AS stratum may report one or more other PLMN IDs acquired in the system broadcast message, so that the NAS stratum performs a normal PLMN selection process so that the UE returns to the LTE network.

210. After returning to the PLMN1, the UE initiates an combined TAU process to restore a data service suspended on the PLMN1.

It should be noted that for a specific explanation of each step in this embodiment of the present invention, reference may be made to corresponding content in one or more other embodiments of this specification, and therefore details are not repeatedly described herein.

Optionally, after step 205 in this embodiment is performed, if the UE is currently in a PS domain connected state, the base station may initiate a PS handover process to hand over the UE to the LTE PLMN with which the UE previously registers, and when a PS handover is performed, the PLMN ID is considered when the base station selects a target cell. The UE performs the handover process initiated by the base station and returns to the LTE PLMN with which the UE previously registers. It should be noted that if the base station initiates the PS handover process after step 205, step 206 to step 209 are not performed, and step 210 is directly performed after the PS handover process is complete.

In the method for returning to an LTE network provided in this embodiment of the present invention, a PLMN ID with which a UE registers is acquired, and LTE frequency band information supported by an LTE PLMN with which the UE registers is determined, so that after a CSFB service ends, the UE returns to the specified LTE frequency band of the PLMN ID and specifies an LTE PLMN of the PLMN ID. Compared with the prior art that a UE returns to an LTE PLMN on an LTE frequency band supported by a CS PLMN, an LTE frequency band and the PLMN ID with which the UE previously registers can be specified, thereby ensuring that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

In addition, even if at least two available PLMNs exist on the specified LTE frequency band, the UE may also be redirected back to the LTE PLMN with which the UE registers before CSFB, thereby further ensuring accuracy of returning, by the UE, to the LTE PLMN with which the UE registers before the CSFB.

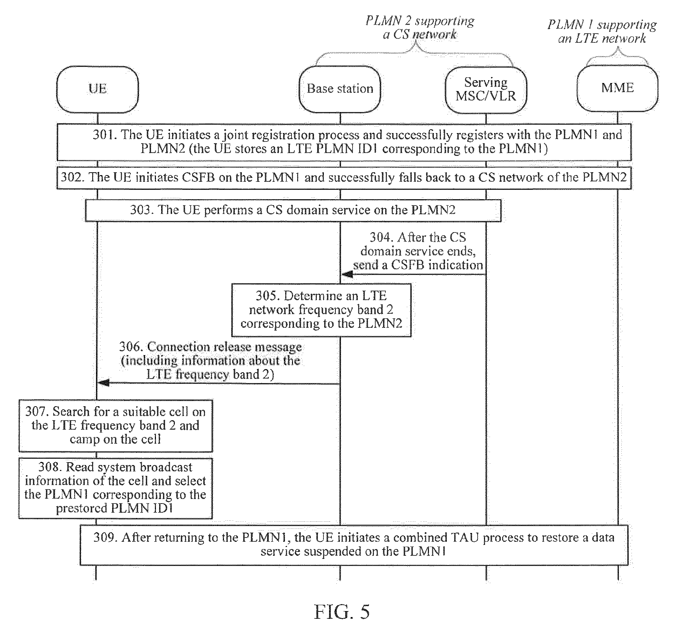

Another embodiment of the present invention further provides a method for returning to an LTE network, where returning to an LTE PLMN registered with before CSFB can be implemented only by implementing LTE PLMN selection with a finer granularity on a UE side. As shown in FIG. 5, the method includes:

301. A UE initiates an joint registration process and successfully registers with a PLMN1 supporting an LTE network and a PLMN2 supporting a CS network, where in the joint registration process, the UE stores the PLMN ID1 corresponding to the PLMN1.

In a process of registering with the PLMN1 by the UE, an MME allocates a valid globally unique temporary identity (Globally Unique Temporary Identity, GUTI) and TAI to the UE, where both the GUTI and the TAI include an identity of the PLMN1 (PLMN ID1).

302. The UE initiates CSFB on the PLMN1 and successfully falls back to a CS network of the PLMN2.

303. The UE performs a CS service on the PLMN2.

An implementation manner of step 302 is similar to that of step 102 in the embodiment shown in FIG. 3, an implementation manner of step 303 is similar to that of step 104 in the embodiment shown in FIG. 3, and therefore details are not repeatedly described herein.

304. After the CS service of the UE ends, a serving MSC/VLR sends a CSFB indication to a base station.

The CSFB indication is used to indicate that the CS service of the current UE is caused by the CSFB, and after the CS service ends, the UE needs to be redirected back to the LTE network.

305. The base station determines an LTE frequency band 2 corresponding to the PLMN2.

Because after receiving the CSFB indication, the base station needs to redirect the UE to the LTE network, the base station determines, according to the PLMN2 of a CS network on which the UE currently is located, information about the LTE frequency band 2 supported by the PLMN2, so that the UE is capable of obtaining, through searching, the LTE network on the LTE frequency band 2. The determined LTE frequency band information is LTE frequency band information supported by a PLMN corresponding to the PLMN ID. Alternatively, the determined LTE frequency band information may also be LTE frequency band information supported by another PLMN.

306. The base station sends a connection release message to the UE, where the connection release message includes information about the LTE frequency band 2.

In this embodiment, content of a redirection indication is the information about the LTE frequency band 2 and is used to instruct the UE to search for a suitable cell on the LTE frequency band 2, so as to return to an LTE network in the suitable cell.

307. The UE searches for a suitable cell on the LTE frequency band 2 and camps on the cell.

The cell on which the UE camps may be a shared cell or a non-shared cell.

308. The UE reads system broadcast information of the cell and selects the PLMN1 corresponding to the prestored PLMN ID 1.

If the UE reads only one PLMN ID from the system broadcast information of the cell, that is, the cell on which the UE camps is a non-shared cell, the UE may directly return to the PLMN1. If the UE reads at least two PLMN IDs from the system broadcast information of the cell, that is, the cell on which the UE camps is a shared cell, the PLMN1 corresponding to the prestored PLMN ID1 is selected. The UE may select, according to the PLMN ID1 prestored in the UE in the registration process in step 301, the LTE PLMN1 with which the UE previously registers, so as to enable the UE to return to the LTE network with which the UE registers before the CSFB.

Specifically, according to different processed and controlled message objects inside the UE, the inside of the UE may be classified into an access stratum (Access Stratum, AS) and a non-access stratum (Non-Access Stratum, NAS). The AS stratum reads at least two PLMN IDs carried in a system broadcast message and reports them to the NAS stratum. The NAS stratum acquires the PLMN ID1 included in the prestored valid GUTI and matches the PLMN ID1 in the GUTI with the at least two PLMN IDs reported by the AS stratum. If the PLMN IDs reported by the AS stratum include the PLMN ID1, the PLMN ID1 is directly selected, so that the UE directly returns to the PLMN1 corresponding to the PLMN ID1, that is, the UE returns to the LTE network with which the UE registers before the CSFB. Certainly, if the PLMN IDs reported by the AS stratum do not include the PLMN ID1, that is, the PLMN1 is not available, it indicates that the UE may have left coverage of the PLMN1 and cannot return to the PLMN1, and therefore the NAS may perform a normal PLMN selection process so that the UE returns to the LTE network.

Alternatively, the UE may also acquire the PLMN ID1 in the valid TAI and select the PLMN1 corresponding to the PLMN ID1, that is, the LTE PLMN1 with which the UE registers before the CSFB.

309. After returning to the PLMN1, the UE initiates an combined TAU process to restore a data service suspended on the PLMN1.

It should be noted that for a specific explanation of each step in this embodiment of the present invention, reference may be made to corresponding content in one or more other embodiments of this specification, and therefore details are not repeatedly described in this embodiment of the present invention.

Optionally, after step 304 in this embodiment is performed, if the UE is currently in a PS domain connected state, the base station may initiate a PS handover process to hand over the UE to the LTE PLMN with which the UE previously registers, and when a PS handover is performed, the PLMN ID is considered when the base station selects a target cell. The UE performs the handover process initiated by the base station and returns to the LTE PLMN with which the UE previously registers. It should be noted that if the base station initiates the PS handover process after step 304, step 305 to step 308 are not performed, and step 309 is directly performed after the PS handover process is complete.

In the method for returning to an LTE network provided in this embodiment of the present invention, when being redirected back to an LTE domain network, a UE selects a prestored PLMN ID with which the UE registers, and returns to an LTE PLMN of the PLMN ID. Compared with random reselection of a PLMN on an LTE frequency band supported by a CS PLMN in the prior art, the UE can return to an LTE PLMN corresponding to a PLMN ID with which the UE registers before CSFB, which not only reduces an unnecessary inter-PLMN handover but also restores a data service suspended on the LTE PLMN with which the UE previously registers, and improves user experience. In addition, improvement is performed only for a reselection manner on a UE side and modification on a protocol is relatively small, so that implementation costs are relatively low.

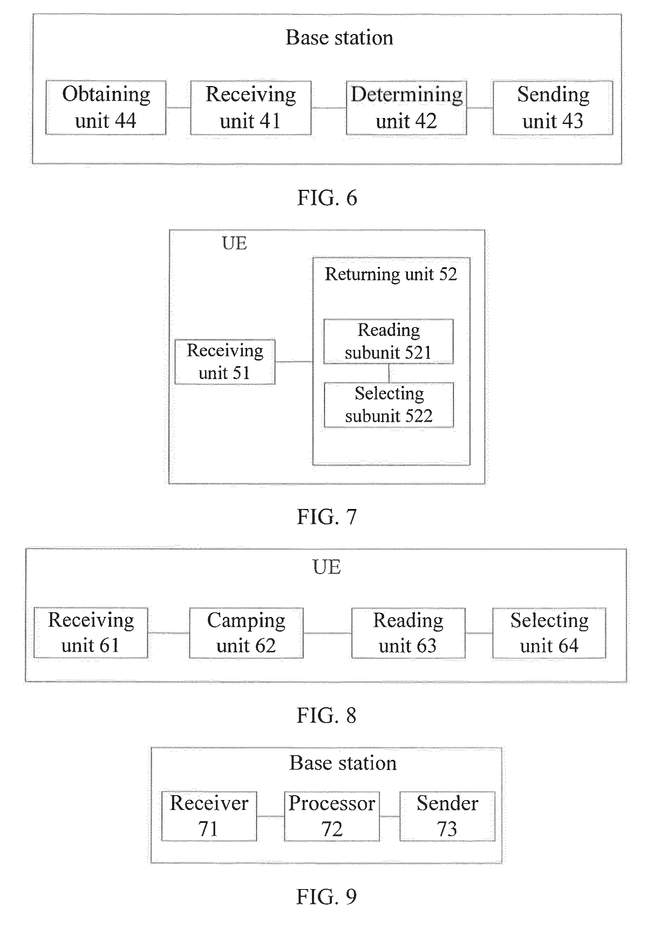

As shown in FIG. 6, another embodiment of the present invention further provides a base station, including: a receiving unit 41, a determining unit 42, a sending unit 43, and an obtaining unit 44.

The obtaining unit 44 is configured to obtain that a circuit switched fallback CSFB service of a user equipment UE ends.

The receiving unit 41 is configured to receive, after the obtaining unit 44 obtains that the CSFB service of the UE ends, a public land mobile network PLMN identity ID of a Long Term Evolution LTE network with which the UE registers, where the PLMN1 ID is sent by a serving mobile switching center/visitor location register MSC/VLR of the user equipment UE.

The determining unit 42 is configured to determine LTE frequency band information corresponding to the PLMN ID received by the receiving unit 41.

The sending unit 43 is configured to send, to the UE, a connection release message that includes the LTE frequency band information determined by the determining unit 42, so that the UE camps on a cell on a frequency band specified in the LTE frequency band information and selects an LTE PLMN corresponding to a PLMN ID included in system broadcast information of the cell.

Further, the obtaining unit 44 is specifically configured to: receive a connection release message that is sent by the serving MSC/VLR and includes a CSFB indication.

Further, in a practical application, due to reasons that the UE moves, a configuration is modified, and so on, the serving MSC/VLR may be switched. If the serving MSC/VLR is an MSC/VLR with which the UE registers, the serving MSC/VLR acquires the PLMN ID from registration information of the UE.

If the serving MSC/VLR is not the MSC/VLR with which the UE registers, the PLMN ID is sent by the MSC/VLR with which the UE registers to the serving MSC/VLR.

Further, the connection release message further includes the PLMN ID, so that the UE camps on the cell on the frequency band specified in the LTE frequency band information and selects an LTE PLMN corresponding to the PLMN ID when the system broadcast information of the cell includes at least two PLMN IDs, so as to ensure that in a situation where at least two available PLMNs exist in the cell on the frequency band specified in the LTE frequency band information, the UE can accurately return to the LTE PLMN with which the UE previously registers.

The base station provided in this embodiment of the present invention acquires a PLMN ID with which a UE registers, and determines LTE frequency band information supported by an LTE PLMN with which the UE registers, so that after a CSFB service ends, the UE returns to an LTE PLMN on the specified LTE frequency band. Compared with the prior art that a UE returns to an LTE PLMN on an LTE frequency band supported by a CS PLMN, an LTE frequency band supported by an LTE PLMN with which the UE registers before CSFB can be specified, thereby ensuring that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

In addition, a PLMN ID with which a UE registers is further sent to the UE, so that even if at least two PLMNs exist on a specified LTE frequency band, the UE can be also redirected back to an LTE PLMN with which the UE registers before CSFB, thereby further ensuring accuracy of returning, by the UE, to the LTE PLMN with which the UE registers before the CSFB.

As shown in FIG. 7, another embodiment of the present invention further provides a UE, including: a receiving unit 51 and a returning unit 52.

The receiving unit 51 is configured to receive a connection release message that is sent by a base station and includes Long Term Evolution LTE frequency band information, where the LTE frequency band information is determined by the base station according to a public land mobile network PLMN identity ID of LTE with which the UE registers.

The returning unit 52 is configured to camp on a cell on a frequency band that is specified in the LTE frequency band information received by the receiving unit 51, and select an LTE PLMN corresponding to a PLMN ID included in system broadcast information of the cell.

Further, in an application scenario, the system broadcast information of the cell on the frequency band specified in the LTE frequency band information includes only one PLMN ID, and the returning unit 52 may specifically be configured to: obtain, through searching, a cell on the frequency band that is specified in the LTE frequency band information received by the receiving unit 51, and camp on the cell on the frequency band specified in the LTE frequency band information; read system broadcast information of the cell and acquire an available PLMN ID from the system broadcast information; and return to an LTE PLMN with which the UE registers before CSFB is initiated.

In another application scenario, the system broadcast information of the cell on the frequency band specified in the LTE frequency band information includes at least two PLMN IDs; the connection release message may further include an PLMN ID, so as to ensure that in a situation where at least two available PLMNs exist in the cell on the frequency band specified in the LTE frequency band information, the UE can accurately return to the LTE PLMN with which the UE previously registers, and the returning unit 52 may include: a reading subunit 521 and a selecting subunit 522.

The reading subunit 521 is configured to read the system broadcast information of the cell, where the system broadcast information includes at least two PLMN IDs.

The selecting subunit 522 is configured to select the LTE PLMN corresponding to the PLMN ID included in the connection release message from the at least two PLMN IDs read by the reading subunit 521.

The UE provided in this embodiment of the present invention acquires LTE frequency band information supported by an LTE PLMN with which the UE registers and after a CSFB service ends, returns to an LTE PLMN on the specified LTE frequency band. Compared with the prior art that a UE returns to an LTE PLMN on an LTE frequency band supported by a CS PLMN, an LTE frequency band supported by an LTE PLMN with which the UE registers before CSFB can be specified, thereby ensuring that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

In addition, a PLMN ID with which a UE registers is further acquired from a connection release message, so that even if at least two LTE PLMNs exist on a specified LTE frequency band, the UE can be redirected to an LTE PLMN with which the UE registers before CSFB, thereby further ensuring accuracy of returning, by the UE, to the LTE PLMN with which the UE registers before the CSFB.

As shown in FIG. 8, another embodiment of the present invention further provides a UE, including: a receiving unit 61, a camping unit 62, a reading unit 63, and a selecting unit 64.

The receiving unit 61 is configured to receive a connection release message that is sent by a base station and includes Long Term Evolution LTE frequency band information.

The camping unit 62 is configured to camp on a cell on a frequency band that is specified in the LTE frequency band information received by the receiving unit 61.

The reading unit 63 is configured to read a public land mobile network PLMN identity ID included in system broadcast information of the cell on which the camping unit 62 camps.

The selecting unit 64 is configured to select, from the PLMN ID read by the reading unit 63, an LTE PLMN corresponding to a PLMN ID prestored in the UE, where the PLMN ID is stored in the UE when the UE registers with the LTE PLMN.

When being redirected back to an LTE domain network, the UE provided in this embodiment of the present invention selects a prestored PLMN ID with which the UE registers, and returns to an LTE PLMN of the PLMN ID. Compared with random reselection of a PLMN on an LTE frequency band supported by a CS PLMN in the prior art, the UE can return to an LTE PLMN corresponding to a PLMN ID with which the UE registers before CSFB, which not only reduces an unnecessary inter-PLMN handover but also restores a data service suspended on the LTE PLMN with which the UE previously registers, and improves user experience. In addition, improvement is performed only for a reselection manner on a UE side and modification on a protocol is relatively small, so that implementation costs are relatively low.

As shown in FIG. 9, another embodiment of the present invention further provides a base station, including: a receiver 71, a processor 72, and a sender 73.

The receiver 71 is configured to obtain that a circuit switched fallback CSFB service of a user equipment UE ends; and further configured to receive a public land mobile network PLMN identity ID of a Long Term Evolution LTE network with which the UE registers, where the PLMN ID is sent by a serving mobile switching center/visitor location register MSC/VLR.

The processor 72 is configured to determine LTE frequency band information according to the PLMN ID received by the receiver.

The sender 73 is configured to send, to the UE, a connection release message that includes the LTE frequency band information determined by the processor 72, so that the UE camps on a cell on a frequency band specified in the LTE frequency band information and selects an LTE PLMN corresponding to a PLMN ID included in system broadcast information of the cell.

Further, the receiver 71 is specifically configured to: receive a connection release message that is sent by the serving MSC/VLR and includes a CSFB indication.

Further, in a practical application, due to reasons that the UE moves, a configuration is modified, and so on, the serving MSC/VLR may be switched. If the serving MSC/VLR is an MSC/VLR with which the UE registers, the serving MSC/VLR acquires the PLMN ID from registration information of the UE.

If the serving MSC/VLR is not the MSC/VLR with which the UE registers, the PLMN ID is sent by the MSC/VLR with which the UE registers to the serving MSC/VLR.

Further, the connection release message further includes the PLMN ID, so that the UE camps on the cell on the frequency band specified in the LTE frequency band information and selects an LTE PLMN corresponding to the PLMN ID when the system broadcast information of the cell includes at least two PLMN IDs, so as to ensure that in a situation where at least two available PLMNs exist in the cell on the frequency band specified in the LTE frequency band information, the UE can accurately return to the LTE PLMN with which the UE previously registers.

The base station provided in this embodiment of the present invention acquires a PLMN ID with which a UE registers, and determines LTE frequency band information supported by an LTE PLMN with which the UE registers, so that after a CSFB service ends, the UE returns to an LTE PLMN on the specified LTE frequency band. Compared with the prior art that a UE returns to an LTE PLMN on an LTE frequency band supported by a CS PLMN, an LTE frequency band supported by an LTE PLMN with which the UE registers before CSFB can be specified, thereby ensuring that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

In addition, a PLMN ID with which a UE registers is further sent to the UE, so that even if at least two LTE PLMNs exist on a specified LTE frequency band, the UE can be also redirected back to an LTE PLMN with which the UE registers before CSFB, thereby further ensuring accuracy of returning, by the UE, to the LTE PLMN with which the UE registers before the CSFB.

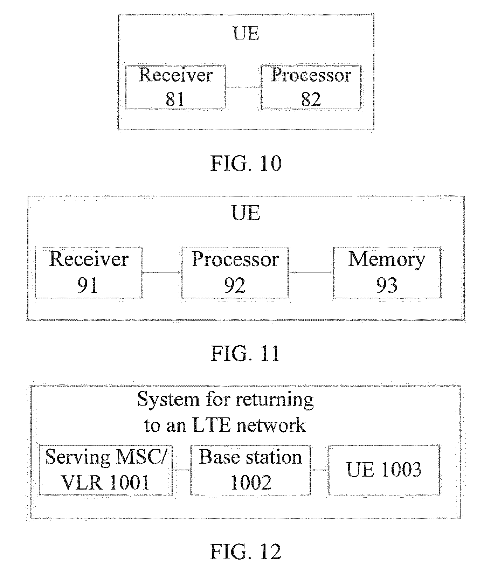

As shown in FIG. 10, another embodiment of the present invention further provides a UE, including: a receiver 81 and a processor 82.

The receiver 81 is configured to receive a connection release message that is sent by a base station and includes Long Term Evolution LTE frequency band information.

The processor 82 is configured to camp on a cell on a frequency band that is specified in the LTE frequency band information received by the receiver 81, and select an LTE PLMN corresponding to a PLMN ID included in system broadcast information of the cell.

Further, in an application scenario, the system broadcast information of the cell on the frequency band specified in the LTE frequency band information includes only one PLMN ID; and
the processor 82 is further configured to camp on the cell on the frequency band that is specified in the LTE frequency band information received by the receiver 81, and return to an LTE PLMN in the cell according to the system broadcast information of the cell on which the processor 82 camps.

In another application scenario, the system broadcast information of the cell on the frequency band specified in the LTE frequency band information includes at least two PLMN IDs; the connection release message further includes an PLMN ID, so as to ensure that in a situation where at least two available PLMNs exist in the cell on the frequency band specified in the LTE frequency band information, the UE can accurately return to the LTE PLMN with which the UE previously registers; and
the processor 82 is further configured to camp on the cell on the frequency band that is specified in the LTE frequency band information received by the receiver 81, read the system broadcast information of the cell on which the processor 82 camps, where the system broadcast information includes at least two PLMN IDs, and select an LTE PLMN corresponding to the PLMN ID from the at least two PLMN IDs.

The UE provided in this embodiment of the present invention acquires LTE frequency band information supported by an LTE PLMN with which the UE registers and after a CSFB service ends, returns to an LTE PLMN on the specified LTE frequency band. Compared with the prior art that a UE returns to an LTE PLMN on an LTE frequency band supported by a CS PLMN, an LTE frequency band supported by an LTE PLMN with which the UE registers before CSFB can be specified, thereby ensuring that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

In addition, a PLMN ID with which a UE registers is further acquired from a connection release message, so that even if at least two LTE PLMNs exist on a specified LTE frequency band, the UE can be redirected to an LTE PLMN with which the UE registers before CSFB, thereby further ensuring accuracy of returning, by the UE, to the LTE PLMN with which the UE registers before the CSFB.

As shown in FIG. 11, another embodiment of the present invention further provides a UE, including: a receiver 91, a processor 92, and a memory 93.

The receiver 91 is configured to receive a connection release message that is sent by a base station and includes Long Term Evolution LTE frequency band information.

The processor 92 is configured to camp on a cell on a frequency band that is specified in the LTE frequency band information received by the receiver 91.

The memory 93 is configured to store an LTE PLMN corresponding to a public land mobile network PLMN identity ID of an LTE network with which the UE registers, where the PLMN ID is stored in the memory 93 when the UE registers with the LTE PLMN.

The receiver 91 is further configured to receive system broadcast information of the cell on which the processor 92 camps.

The processor 92 is further configured to read a PLMN ID included in the system broadcast information of the cell received by the receiver 91, and select the LTE PLMN corresponding to the PLMN ID prestored in the memory 93.

When being redirected back to a PS network, the UE provided in this embodiment of the present invention selects a prestored PLMN ID with which the UE registers, and returns to an LTE PLMN of the PLMN ID. Compared with random reselection of a PLMN on an LTE frequency band supported by a CS PLMN in the prior art, the UE can return to an LTE PLMN corresponding to a PLMN ID with which the UE registers before CSFB, which not only reduces an unnecessary inter-PLMN handover but also restores a data service suspended on the LTE PLMN with which the UE previously registers, and improves user experience. In addition, improvement is performed only for a reselection manner on a UE side and modification on a protocol is relatively small, so that implementation costs are relatively low.

As shown in FIG. 12, another embodiment of the present invention further provides a system for returning to an LTE network, including: a serving MSC/VLR 1001, a base station 1002, and a UE 1003.

The serving MSC/VLR 1001 is configured to send, after a circuit switched fallback CSFB service of the UE 1003 ends, a public land mobile network PLMN identity ID of LTE with which the UE 1003 registers to the base station 1002.

The base station 1002 is configured to obtain that the circuit switched fallback CSFB service of the user equipment UE 1003 ends; receive the public land mobile network PLMN identity ID of the LTE network with which the UE 1103 registers, where the PLMN ID is sent by a serving mobile switching center/visitor location register MSC/VLR 1101; determine LTE frequency band information according to the PLMN ID; and send, to the UE 1103, a connection release message that includes the LTE frequency band information.

The UE 1003 is configured to receive the connection release message that is sent by the base station 1002 and includes the LTE frequency band information; and camp on a cell on a frequency band specified in the LTE frequency band information, and select an LTE PLMN corresponding to a public land mobile network PLMN identity ID included in system broadcast information of the cell.

In the system for returning to an LTE network provided in this embodiment of the present invention, a PLMN ID with which a UE registers is acquired, and LTE frequency band information supported by an LTE PLMN with which the UE registers is determined, so that after a CSFB service ends, the UE returns to the specified LTE frequency band of the PLMN ID and specifies an LTE PLMN of the PLMN ID. Compared with the prior art that a UE returns to an LTE PLMN on an LTE frequency band supported by a CS PLMN, the LTE PLMN with which the UE previously registers can be specified, which not only reduces an unnecessary inter-PLMN handover but also restores a data service suspended on the LTE PLMN with which the UE previously registers, and improves user experience.

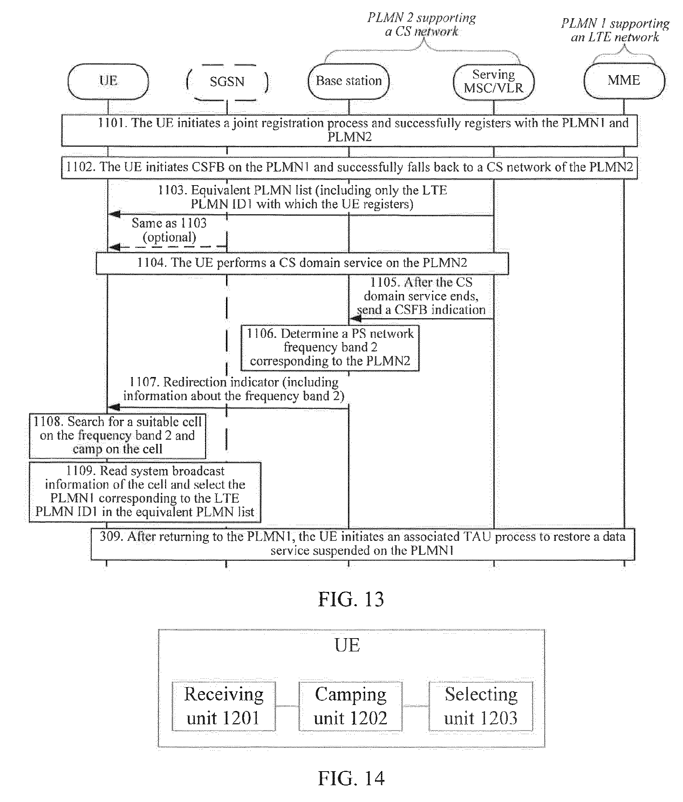

As shown in FIG. 13, another embodiment of the present invention further provides a method for returning to an LTE network, where the method may include:

1101. A UE initiates an joint registration process and successfully registers with a PLMN1 supporting an LTE network and a PLMN2 supporting a CS network.

1102. The UE initiates CSFB on the PLMN1 and successfully falls back to a CS network of the PLMN2.

Implementation manners of steps 1101-1102 are similar to those of steps 101-102 in the embodiment shown in FIG. 3, and therefore details are not repeatedly described herein.

1103. A mobility management network element sends an equivalent PLMN list to the UE, where the equivalent PLMN list includes the PLMN ID1 with which the UE registers.

The mobility management network element may be a serving MSC/VLR or a serving GPRS support node (Serving GPRS Support Node, SGSN for short, where GPRS is short for General Packet Radio Service) on a 2G/3G network. After receiving the equivalent PLMN list that includes the PLMN ID1 with which the UE registers, the UE stores the equivalent PLMN list for use in subsequent step 1109.

Specifically, if the UE falls back to a new location area (Location Area, LA) after initiating a CSFB process, the UE may initiate a CS domain location area update (Location Area Update, LAU) process to the serving MSC/VLR and carries a CSFB indication in an update request message, and the serving MSC/VLR delivers an equivalent PLMN list to the UE in a location area update (LAU) process according to the carried CSFB indication, where the equivalent PLMN list includes the PLMN ID1 with which the UE registers before the CSFB. Optionally, the equivalent PLMN list may include only the PLMN ID1 with which the UE registers before the CSFB. Or, if after initiating a CSFB process, the UE falls back to a new routing area (Routing Area, RA), the UE may initiate a PS domain routing area update process to the SGSN, where if the routing area update process is initiated after a PS handover process is complete, the SGSN may obtain, in the PS handover process, that the routing area update process is initiated in the CSFB process; or, in the routing area update process, the SGSN obtains, from an MME with which the UE registers, that the routing area update process is initiated in the CSFB process, and the SGSN delivers an equivalent PLMN list to the UE according to the CSFB indication, where the equivalent PLMN list includes the PLMN ID1 with which the UE registers before the CSFB. Optionally, the equivalent PLMN list may include only the PLMN ID1 with which the UE registers before the CSFB. Or, if the UE simultaneously initiates a CS domain location area update process and a PS domain routing area update process, both the serving MSC/VLR and the SGSN may deliver same equivalent PLMN lists to the UE, where both the equivalent PLMN lists delivered by the serving MSC/VLR and the SGSN include the PLMN ID1 with which the UE registers before the CSFB. Optionally, the equivalent PLMN lists may include only the PLMN ID1 with which the UE registers before the CSFB.

1104. The UE performs a CS service on the PLMN2.

1105. After the CS service of the UE ends, the serving MSC/VLR sends the CSFB indication to a base station.

An implementation manner of step 1105 is similar to that of step 304 in the embodiment shown in FIG. 5. The CSFB indication is used to indicate that the CS service of the current UE is caused by the CSFB, and after the CS service ends, the UE needs to be redirected back to the LTE network.

1106. The base station determines an LTE frequency band 2 corresponding to the PLMN2.

The determined LTE frequency band information is LTE frequency band information supported by a PLMN corresponding to the PLMN ID. Alternatively, the determined LTE frequency band information may also be LTE frequency band information supported by another PLMN.

1107. The base station sends a connection release message to the UE, where the connection release message includes information about the LTE frequency band 2.

1108. The UE searches for a suitable cell on the LTE frequency band 2 and camps on the cell.

Implementation manners of steps 1106-1108 are similar to those of steps 305-307 in the embodiment shown in FIG. 5, and therefore details are not repeatedly described herein.

1109. The UE reads system broadcast information of the cell and selects the LTE PLMN1 corresponding to the PLMN ID1 included in the equivalent PLMN list from a PLMN ID included in the system broadcast information.

The UE may read at least two available PLMN IDs from the system broadcast information of the cell and matches the PLMN ID1 included in the equivalent PLMN list received and stored in step 1103 with the PLMN IDs read from the system broadcast information. If there is a PLMN ID that matches the PLMN ID 1, it indicates that the LTE PLMN1 is available, and the LTE PLMN1 is directly selected. If there is no PLMN ID that is included in the PLMN IDs read from the system broadcast information and matches the PLMN ID1, it indicates that the LTE PLMN1 is not available, and the UE may use a traditional PLMN reselection mechanism to select a PLMN or randomly select an available PLMN.

Optionally, after step 1105 in this embodiment is performed, if the UE is currently in a PS domain connected state, the base station may initiate a PS handover process to hand over the UE to the LTE PLMN with which the UE previously registers, and when a PS handover is performed, the PLMN ID is considered when the base station selects a target cell. The UE performs the handover process initiated by the base station and returns to the LTE PLMN with which the UE previously registers. It should be noted that if the base station initiates the PS handover process after step 1105, step 1106 to step 1108 are not performed, and step 1109 is directly performed after the PS handover process is complete.

In the method for returning to an LTE network provided in this embodiment of the present invention, an equivalent PLMN list acquired by a UE is configured as a list that includes only a PLMN ID with which the UE registers before CSFB, so that only one equivalent PLMN exists for selection when the UE returns to an LTE network according to the equivalent PLMN list. Compared with a method in the prior art that a UE selects one PLMN from at least two equivalent PLMNs in a cell, it can be ensured that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

As shown in FIG. 14, another embodiment of the present invention further provides a UE, including: a receiving unit 1201, a camping unit 1202, and a selecting unit 1203.

The receiving unit 1201 is configured to receive, in a circuit switched fallback CSFB process, an equivalent PLMN list that is sent by a mobility management network element and includes a public land mobile network PLMN identity ID of a Long Term Evolution LTE network with which the UE registers; and is further configured to receive a connection release message that is sent by a base station and includes LTE frequency band information.

The camping unit 1202 is configured to camp on a cell on a frequency band that is specified in the LTE frequency band information received by the receiving unit 1201.

The selecting unit 1203 is configured to select an LTE PLMN corresponding to the PLMN ID included in the equivalent PLMN list from at least one PLMN ID included in system broadcast information of the cell on which the camping unit 1202 camps.

The UE provided in this embodiment of the present invention configures an equivalent PLMN list acquired by the UE as a list that includes only a PLMN ID with which the UE registers before CSFB, so that only one equivalent PLMN exists for selection when the UE returns to an LTE network according to the equivalent PLMN list. Compared with a method in the prior art that a UE selects one PLMN from at least two equivalent PLMNs in a cell, it can be ensured that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

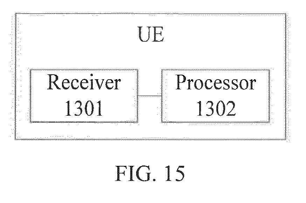

As shown in FIG. 15, another embodiment of the present invention further provides a UE, including: a receiver 1301 and a processor 1302.

The receiver 1301 is configured to receive, in a circuit switched fallback CSFB process, an equivalent PLMN list that is sent by a mobility management network element and includes a public land mobile network PLMN identity ID of a Long Term Evolution LTE network with which the UE registers; and further configured to receive Long Term Evolution LTE frequency band information sent by a base station.

The processor 1302 is configured to camp on a cell on a frequency band that is specified in the LTE frequency band information received by the receiver 1301; and select an LTE PLMN corresponding to the PLMN ID included in the equivalent PLMN list from a public land mobile network PLMN identity ID included in system broadcast information of the cell.

The receiver 1301 is further configured to receive, in the CSFB process of the UE, the equivalent PLMN list sent by the mobility management network element, where the equivalent PLMN list includes only the PLMN ID with which the UE registers.

According to the embodiment of the present invention, the UE configures an equivalent PLMN list acquired by the UE as a list that includes only a PLMN ID with which the UE registers before CSFB, so that there exists only one equivalent PLMN for selection when the UE returns to an LTE network according to the equivalent PLMN list. Compared with a method in the prior art that a UE selects one PLMN from at least two equivalent PLMNs in a cell, it can be ensured that the UE is redirected to the LTE PLMN with which the UE previously registers before the CSFB, which not only reduces an unnecessary inter-PLMN handover but also restores a data service suspended on the LTE PLMN with which the UE previously registers before the CSFB, and improves user experience.

It may be clearly understood by persons skilled in the art that, for the purpose of convenient and brief description, division of the foregoing function modules is taken as an example for illustration, in actual implementation, the foregoing functions can be allocated to different function modules and implemented according to the need, that is, inner structure of the apparatus is divided into different function modules to implement all or a part of the functions described above. For a detailed working process of the foregoing system, apparatus and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, dividing of the modules or the units is merely a type of logical function dividing, and there may be other dividing manners during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. A part of or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit. The integrated units may be implemented in a form of hardware, or may be implemented in a form of a software functional unit.

When the integrated units are implemented in a form of a software functional unit and sold or used as an independent product, the integrated units may be stored in a computer-readable storage medium. Based on such understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes: any mediums that can store program code, such as a USB flash drive, a removable hard disk, a read-only memory (ROM, Read-Only Memory), a random access memory (RAM, Random Access Memory), a magnetic disk, or an optical disc.

Through the foregoing description of the embodiments, it is clear to persons skilled in the art that the present invention may be implemented by software plus necessary universal hardware, and definitely may also be implemented by hardware, but in many cases, the software implementation is preferred. Based on such understanding, the technical solutions of the present invention essentially, or the part contributing to the prior art may be implemented in the form of a software product. The computer software product is stored in a readable storage medium, for example, a floppy disc, hard disk, or optical disc of the computer, and includes several instructions for instructing a computer device (which may be a personal computer, a server, or a network device) to perform the methods described in the embodiments of the present invention.

It should be noted that the foregoing embodiments are merely intended for describing the technical solutions of the present invention, rather than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof, without departing from the spirit and scope of the technical solutions of the embodiments of the present invention.

## Claims

1. A method for returning to a Long Term Evolution LTE network, comprising:
obtaining, by a base station, that a circuit switched fallback CSFB service of a user equipment UE ends;
receiving, by the base station, a public land mobile network PLMN identity ID of an LTE network with which the UE registers, wherein the PLMN ID is sent by a serving mobile switching center/visitor location register MSC/VLR;
determining LTE frequency band information according to the PLMN ID; and
sending, to the UE, a connection release message that comprises the LTE frequency band information.

2. The method according to claim 1, wherein the obtaining, by a base station, that a circuit switched fallback CSFB service of a user equipment UE ends comprises:
receiving a connection release message that is sent by the serving MSC/VLR and comprises a CSFB indication.

3. The method according to claim 1 or 2, wherein:
if the serving MSC/VLR is an MSC/VLR with which the UE registers, the serving MSC/VLR acquires the PLMN ID from registration information of the UE; and
if the serving MSC/VLR is not the MSC/VLR with which the UE registers, the PLMN ID of the LTE network with which the UE registers is sent by the MSC/VLR with which the UE registers to the serving MSC/VLR.

4. The method according to any one of claims 1-3, wherein the connection release message that comprises the LTE frequency band information further comprises the PLMN ID.

5. A method for returning to a Long Term Evolution LTE network, comprising:
receiving, by a user equipment UE, a connection release message that is sent by a base station and comprises LTE frequency band information; and
camping on a cell on a frequency band specified in the LTE frequency band information, and selecting an LTE PLMN corresponding to a public land mobile network PLMN identity ID comprised in system broadcast information of the cell.

6. The method according to claim 5, wherein the connection release message further comprises a PLMN ID of an LTE network with which the UE registers; and the selecting an LTE PLMN corresponding to a PLMN ID comprised in system broadcast information of the cell comprises:
reading the system broadcast information of the cell, wherein the system broadcast information comprises at least two PLMN IDs; and
selecting the LTE PLMN corresponding to the PLMN ID comprised in the connection release message from the at least two PLMN IDs.

7. A method for returning to a Long Term Evolution LTE network, comprising:
receiving, by a user equipment UE, a connection release message that is sent by a base station and comprises LTE frequency band information;
camping on a cell on a frequency band specified in the LTE frequency band information;
reading a public land mobile network PLMN identity ID comprised in system broadcast information of the cell; and
selecting an LTE PLMN corresponding to a PLMN ID prestored in the UE from the PLMN ID, wherein the PLMN ID is stored in the UE when the UE registers with the LTE PLMN

8. A method for returning to a Long Term Evolution LTE network, comprising:
receiving, by a user equipment UE in a circuit switched fallback CSFB process, an equivalent PLMN list that is sent by a mobility management network element and comprises a public land mobile network PLMN identity ID of an LTE network with which the UE registers;
receiving, by the UE, a signaling release message that is sent by a base station and comprises LTE frequency band information;
camping on a cell on a frequency band specified in the LTE frequency band information; and
selecting an LTE PLMN corresponding to the PLMN ID comprised in the equivalent PLMN list from at least one PLMN ID comprised in system broadcast information of the cell.

9. Abase station, comprising:
a obtaining unit, configured to obtain that a circuit switched fallback CSFB service of a user equipment UE ends;
a receiving unit, configured to receive a public land mobile network PLMN identity ID of a Long Term Evolution LTE network with which the UE registers, wherein the PLMN ID is sent by a serving mobile switching center/visitor location register MSC/VLR of the obtaining unit;
a determining unit, configured to determine LTE frequency band information according to the PLMN ID received by the receiving unit; and
a sending unit, configured to send, to the UE, a connection release message that comprises the LTE frequency band information determined by the determining unit.

10. The base station according to claim 9, wherein the obtaining unit is specifically configured to receive a connection release message that is sent by the serving MSC/VLR and comprises a CSFB indication.

11. The base station according to claim 8 or 9, wherein the connection release message that comprises the LTE frequency band information further comprises the PLMN ID.

12. A user equipment UE, comprising:
a receiving unit, configured to receive a connection release message that is sent by a base station and comprises Long Term Evolution LTE frequency band information; and
a returning unit, configured to camp on a cell on a frequency band that is specified in the LTE frequency band information received by the receiving unit, and select an LTE PLMN corresponding to a public land mobile network PLMN identity ID comprised in system broadcast information of the cell.

13. The UE according to claim 12, wherein the connection release message further comprises a PLMN ID of an LTE network with which the UE registers; and the returning unit comprises:
a reading subunit, configured to read the system broadcast information of the cell, wherein the system broadcast information comprises at least two PLMN IDs; and
a selecting subunit, configured to select the LTE PLMN corresponding to the PLMN ID comprised in the connection release message from the at least two PLMN IDs read by the reading subunit.

14. A user equipment UE, comprising:
a receiving unit, configured to receive a connection release message that is sent by a base station and comprises Long Term Evolution LTE frequency band information;
a camping unit, configured to camp on a cell on a frequency band that is specified in the LTE frequency band information received by the receiving unit;
a reading unit, configured to read a public land mobile network PLMN identity ID comprised in system broadcast information of the cell on which the camping unit camps; and
a selecting unit, configured to select, from the PLMN ID read by the reading unit, an LTE PLMN corresponding to a PLMN ID prestored in the UE, wherein the PLMN ID is stored in the UE when the UE registers with the LTE PLMN.

15. A user equipment UE, comprising:
a receiving unit, configured to receive, in a circuit switched fallback CSFB process, an equivalent PLMN list that is sent by a mobility management network element and comprises a public land mobile network PLMN identity ID of a Long Term Evolution LTE network with which the UE registers, wherein
the receiving unit is further configured to receive a connection release message that is sent by a base station and comprises LTE frequency band information;
a camping unit, configured to camp on a cell on a frequency band that is specified in the LTE frequency band information received by the receiving unit; and
a selecting unit, configured to select an LTE PLMN corresponding to the PLMN ID comprised in the equivalent PLMN list from at least one PLMN ID comprised in system broadcast information of the cell on which the camping unit camps.

16. A base station, comprising:
a receiver, configured to obtain that a circuit switched fallback CSFB service of a user equipment UE ends; and further configured to receive a public land mobile network PLMN identity ID of a Long Term Evolution LTE network with which the UE registers, wherein the PLMN ID is sent by a serving mobile switching center/visitor location register MSC/VLR;
a processor, configured to determine LTE frequency band information according to the PLMN ID received by the receiver; and
a sender, configured to send, to the UE, a connection release message that comprises the LTE frequency band information determined by the processor.

17. The base station according to claim 16, wherein the receiver is specifically configured to receive a connection release message that is sent by the serving MSC/VLR and comprises a CSFB indication.

18. The base station according to claim 16, wherein the connection release message that comprises the LTE frequency band information further comprises the PLMN ID.

19. A user equipment UE, comprising:
a receiver, configured to receive a connection release message that is sent by a base station and comprises Long Term Evolution LTE frequency band information; and
a processor, configured to camp on a cell on a frequency band that is specified in the LTE frequency band information received by the receiver, and select an LTE PLMN corresponding to a public land mobile network PLMN ID comprised in system broadcast information of the cell.

20. The UE according to claim 19, wherein the connection release message further comprises a PLMN ID of an LTE network with which the UE registers; and
the processor is further configured to read the system broadcast information of the cell on which the processor camps, wherein the system broadcast information comprises at least two PLMN IDs; and select the LTE PLMN corresponding to the PLMN ID comprised in the connection release message from the at least two PLMN IDs.

21. A user equipment UE, comprising:
a receiver, configured to receive a connection release message that is sent by a base station and comprises Long Term Evolution LTE frequency band information;
a processor, configured to camp on a cell on a frequency band that is specified in the LTE frequency band information received by the receiver; and
a memory, configured to store a public land mobile network PLMN identity ID of an LTE network with which the UE registers, wherein the PLMN ID is stored in the memory by the UE when the UE registers with the LTE PLMN, wherein:
the receiver is further configured to receive system broadcast information of the cell on which the processor camps; and
the processor is further configured to read a PLMN ID comprised in the system broadcast information of the cell received by the receiver, and select an LTE PLMN corresponding to the PLMN ID prestored in the memory.

22. A user equipment UE, comprising:
a receiver, configured to receive, in a circuit switched fallback CSFB process, an equivalent PLMN list that is sent by a mobility management network element and comprises a public land mobile network PLMN identity ID of a Long Term Evolution LTE network with which the UE registers, wherein
the receiver is further configured to receive a connection release message that is sent by a base station and comprises LTE frequency band information; and
a processor, configured to camp on a cell on a frequency band that is specified in the LTE frequency band information received by the receiver; and select an LTE PLMN corresponding to the PLMN ID comprised in the equivalent PLMN list from at least one PLMN ID comprised in system broadcast information of the cell.

23. A system for returning to a Long Term Evolution LTE network, comprising: a serving mobile switching center/visitor location register MSC/VLR, the base station according to claim 9, 10, 11, 16, 17, or 18, and the user equipment UE according to claim 12, 13, 19, or 20, wherein:
the serving MSC/VLR is configured to send, after a circuit switched fallback CSFB service of the UE ends, a public land mobile network PLMN identity ID of LTE with which the UE registers to the base station.
